## Europäisches Patentamt

## European Patent Office

## Office européen des brevets

(11) Veröffentlichungsnummer: **0 127 227**
**B1**

## EUROPÄISCHE PATENTSCHRIFT

(45) Veröffentlichungstag der Patentschrift:
**19.04.89**

(51) Int. Cl.⁴: **C 03 B 37/025**

(21) Anmeldenummer: **84200692.6**

(22) Anmeldetag: **15.05.84**

(54) **Verfahren zur Herstellung von optischen Wellenleitern.**

(30) Priorität: **21.05.83 DE 3318589**

(43) Veröffentlichungstag der Anmeldung:
**05.12.84 Patentblatt 84/49**

(45) Bekanntmachung des Hinweises auf die Patenterteilung:
**19.04.89 Patentblatt 89/16**

(84) Benannte Vertragsstaaten:
**BE CH DE FR GB IT LI NL SE**

(56) Entgegenhaltungen:
EP-A-0 086 533
FR-A-2 504 514
US-A-4 165 152

EUROPEAN CONFERENCE ON OPTICAL COMMUNICATION, Sitzung A III, 21.-24. September 1982, Seiten 66-69, Cannes, FR; P. BACHMANN et al.: "Fluorine doped single mode and step index fibres prepared by the low pressure PCVD-process"

Die Akte enthält technische Angaben, die nach dem Eingang der Anmeldung eingereicht wurden und die nicht in dieser Patentschrift enthalten sind.

(73) Patentinhaber: **Philips Patentverwaltung GmbH, Wendenstrasse 35 Postfach 10 51 49, D-2000 Hamburg 1 (DE)**
(84) Benannte Vertragsstaaten: **DE**

(73) Patentinhaber: **N.V. Philips' Gloeilampenfabrieken, Groenewoudseweg 1, NL- 5621 BA Eindhoven (NL)**
(84) Benannte Vertragsstaaten: **BE CH FR GB IT LI NL SE**

(72) Erfinder: **Bachmann, Peter, Dr., Karlstrasse 55, D-5100 Aachen (DE)**
Erfinder: **Geittner, Peter, Dr., Ronheider Weg 26, D-5100 Aachen (DE)**
Erfinder: **Lydtin, Hans, Dr., Am Göpelschacht 9, D-5190 Stolberg (DE)**
Erfinder: **Wilson, Howard, Königsberger Strasse 32, D-5100 Aachen (DE)**

(74) Vertreter: **Piegler, Harald, Dipl.- Chem., Philips Patentverwaltung GmbH Wendenstrasse 35 Postfach 10 51 49, D-2000 Hamburg 1 (DE)**

## Beschreibung

Die Erfindung betrifft ein Verfahren zur Herstellung von optischen Wellenleitern, wobei auf der Innenseite eines Substratrohres aus einem reaktiven Gasgemisch durch Elektronenstoßanregungen direkt kompakte Glasschichten ohne Sintern erzeugt werden.

Für die Herstellung von hochwertigen optischen Wellenleitern, insbesondere von Lichtleitfasern, werden zur Zeit praktisch nur vier Verfahren angewendet (siehe Koel, Proc. 8th European Conf. on Optical Comm. (8ECOC) Cannes, Sept. 1982, S. 1 bis 8, 1982). Es sind dies

1) das MCVD-Verfahren,
2) das OVD-Verfahren,
3) das VAD-Verfahren und
4) das PCVD-Verfahren.

Der wesentliche Unterschied zwischen diesen Verfahren liegt in der Art und Weise, wie die für die Abscheidung notwendigen chemischen Reaktionen angeregt werden. Während bei den Verfahren (1) bis (3) eine thermische Anregung angewendet wird, nutzt das PCVD-Verfahren (4) Elektronenstoßanregungen aus. Bei der thermischen Anregung entstehen im wesentlichen in der Gasphase primär feine Glaspartikel, die nach der Abscheidung auf einem Substrat eine poröse Schicht bilden. Die poröse Schicht wird nach der Abscheidung zu einer kompakten Glasschicht gesintert.

Die porösen Vorformen können eine sehr starke Verunreinigung mit OH-Gruppen aufweisen, wenn die rußartigen Glaspartikel direkt in einem $H_2/O_2$-Knallgasbrenner erzeugt werden, wie bei den Verfahren (2) und (3) (OVD- und VAD-Verfahren), oder wenn wasserstoffhaltige Verbindungen, wie z. B. $SiHCl_3$, HCl oder Kohlenwasserstoffverbindungen, in den Ausgangsmaterialien vorkommen, die nur sehr kostenintensiv abgetrennt werden können ((1) MCVD-Verfahren).

Im Gegensatz hierzu tritt bei der Elektronenstoßanregung beim PCVD-Verfahren die Bildung feiner Glaspartikelchen nicht ein: die gasförmigen Reaktionsprodukte liegen in molekularer oder atomarer Form vor; sie können über relativ schnelle Diffusion zur Innenwand des normalerweise benutzten Rohres gelangen und dort direkt massive Glasschichten bilden.

Obwohl es große Vorteile bietet, direkt aus der Gasphase kompakte Glasschichten ohne Sinterung bilden zu können, ist hiermit doch der Nachteil verbunden, daß derartige Schichten nach ihrer Bildung sich nur schwierig von eingebauten OH-Gruppen befreien lassen.

Bei der Herstellung von optischen Wellenleitern ist für eine verlustarme Lichtübertragung die Erzielung möglichst niedriger Dämpfungen wünschenswert Insbesondere sollen die Dämpfungen im Übertragungsfenster zwischen 800 und 1600 nm möglichst gering sein. In diesem Bereich liegen mehrere Absorptionsbanden - und zwar insbesondere bei 950 nm, bei 1240 nm und bei 1380 nm - die Bindungen von OH-Gruppen im Glas des optischen Wellenleiters zugeordnet werden können. Bereits die Anwesenheit von OH-Gruppen in der Größenordnung "parts per million" (ppm) im Wellenleitermaterial genügt, um sehr starke Absorptionen (und damit Dämpfungen) im angestrebten Übertragungsbereich zu verursachen. Im allgemeinen gilt, daß 1 ppm OH zu etwa 50 dB/km Zusatzdämpfung bei 1380 nm führt.

Für Wellenleiter, die nach den Verfahren (1) bis (3) hergestellt werden, sind extrem niedrige Absorptionswerte von kleiner als 1 dB/km erreicht worden. Diese niedrigen Absorptionen werden nur dann erreicht, wenn die bei diesen Verfahren anfallenden Ruß-Sinterkörper in poröser Form einer zusätzlichen, teilweise zeit- und kostenintensiven Reinigung unterworfen werden und/oder unter Verwendung entsprechend vorgereinigter Materialien hergestellt werden. Eine solche Reinigung ist aus den Dokumenten Patent Abstracts of Japan, unexaminated applications, Vol. 4 No. 106 (C 20) (588) July 30, 1980 und JP-A-5 567 533 bekannt; sie besteht aus einer Nachbehandlung eines durch Flammhydrolyse gebildeten laminaren Niederschlags, bei der der Niederschlag, bevor er gesintert wird, in einer Atmosphäre erhitzt wird, die eine Fluorverbindung enthält.

Die für eine solche Reinigung notwendige poröse Form des abgeschiedenen Glases mit einer entsprechend großen, dem wasserentziehenden Mittel zugänglichen Oberfläche ist jedoch bei dem PCVD-Verfahren in keiner Herstellungsphase gegeben. Optische Wellenleiter, die bisher nach dem PCVD-Verfahren hergestellt worden sind, hatten demgemäß relativ hohe OH-Zusatzabsorptionen, die auch bei sorgfältiger Regelung der Herstellungsbedingungen und bei Verwendung vorgereinigter Rohmaterialien nur schwierig auf die mit den anderen Verfahren erzielten Werte erniedrigt werden konnten.

Die Erfindung hat die Aufgabe, ein Verfahren zu schaffen, mit dem aus der Gasphase direkt kompakte Glasschichten abgeschieden werden, die eine niedrige OH-Zusatz-Absorption aufweisen.

Diese Aufgabe wird erfindungsgemäß dadurch gelöst, daß der Mischung der Reaktionsgase während der Gesamtdauer der Erzeugung von Glasschichten, sowohl bei der Abscheidung von etwaigen Anpassungs- oder optischen Claddingschichten als auch bei der Abscheidung von Kernmaterial eine flüchtige wasserstofffreie Fluorverbindung beigemischt wird.

Vorzugsweise wird die Menge der flüchtigen wasserstofffreien Fluorverbindung während der Gesamtdauer der Erzeugug von Glasschichten konstant gehalten.

Bei den Untersuchungen, die zur Erfindung geführt haben, wurde festgestellt, daß die Anwesenheit von fluorhaltigen Verbindungen während der gesamten Dauer des Abscheidungs-Prozesses es ermöglicht, die OH-Zusatz-Absorption in den abgeschiedenen Glasschichten auf Werte von 0,6 dB/km bei 1380 nm zu erniedrigen. Die Anwesenheit von fluorhaltigen Verbindungen während der gesamten Dauer des Abscheidungsprozesses wird dadurch erreicht, daß dem Gasgemisch sowohl bei der Abscheidung von etwaigen Anpassungs- oder optischen Claddingschichten als auch bei der Abscheidung von Kernmaterial wasserstofffreie fluorhaltige Verbindungen zugesetzt werden.

Das Substratrohr besteht z. B. aus Glas oder $SiO_2$.

Als wasserstofffreie fluorhaltige Verbindungen werden vorzugsweise flüchtige organische fluorhaltige Kohlenstoffverbindungen, wie z. B. $CF_4$ und z. B. $C_2F_6$, aber auch anorganische fluorhaltige Verbindungen, wie $SiF_4$, eingesetzt. Die Anwendung von $C_2F_6$ wird jedoch bevorzugt, da hiermit schon bei geringen Konzentrationen ein deutlicher Effekt auftritt.

Das erfindungsgemäße Verfahren ist bei der Herstellung von Wellenleitern, die ausschließlich Fluor als brechungsindexverändernden Zusatz enthalten, ebenso anwendbar wie bei der Herstellung von Wellenleitern unter zusätzlicher Verwendung von anderen Dotierungsstoffen, wie z. B. $GeO_2$. Die Anwendbarkeit der Erfindung ist auch unabhängig vom Wellenleitertyp, d.h. sowohl bei der Herstellung von Multimoden-Wellenleitern als auch bei der Herstellung von Monomode-Wellenleitern wird eine extrem niedrige Absorption infolge eingebauter OH-Gruppen erreicht. Ein zeit- und kostenintensiver Nachreinigungsschritt für die beschichteten Glasrohre ist beim erfindungsgemäßen Verfahren nicht nötig.

Aus FR-A-2 496 086 ist zwar ein Verfahren zur Herstellung von optischen Wellenleitern bekannt, bei dem dotiertes und undotiertes Quarzglas hergestellt wird, indem die Reaktionsgase in die Flamme eines Plasmabrenners geblasen werden. Eine der vorgeschlagenen Dotierungen ist Fluor. Nach diesem Dokument nimmt der Gehalt an OH-Gruppen im gleichen Maße ab wie der Gehalt an Fluor zunimmt. Es zeigt sich aber, daß bei 1300 nm bei einem Fluorgehalt von 0,4 Gew.-% im Kernmaterial noch immer mit einer Dämpfung von 5 dB/km zu rechnen ist. Hieraus läßt sich ein Gehalt an OH-Gruppen von 0,1 ppm abschätzen. Aufgrund dieses Dokuments war daher eine weitere Erniedrigung des Gehaltes an OH-Gruppen durch Verwendung von Fluor nicht zu erwarten. Es hat sich jedoch gezeigt, daß sich beim PCVD-Verfahren überraschenderweise eine weitere Herabsetzung des Gehaltes an OH-Gruppen bis auf 0,01 ppm, also um eine Größenordnung kleiner, erreichen läßt.

Vorzugsweise wird dem reaktiven Gasgemisch ($SiCl_4 + O_2$, $SiCl_4 + O_2 + SiF_4$, $SiCl_4 + O_2 + GeCl_4$) eine solche Menge einer wasserstofffreien Fluorverbindung beigemischt, daß im fertigen Wellenleiter der Brechungsindex um 0,07 bis 0,4 % herabgesetzt wird. Es stellt sich heraus, daß hierzu eine Menge von 0,2 bis 1,3 Mol-% $C_2F_6$ ausreicht.

Die Erfindung wird anhand einer Zeichnung und einiger Ausführungsbeispiele näher erläutert.

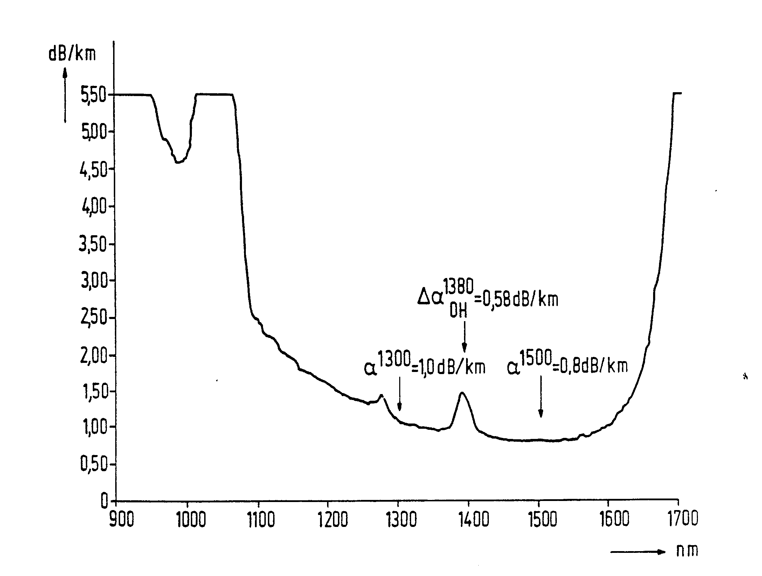

Die einzige Figur der Zeichnung zeigt das Dämpfungsspektrum eines erfindungsgemäß hergestellten Monomode-Wellenleiters.

**Beispiel 1:**

Herstellung eines Multimoden-Gradientenindex-Wellenleiters unter Verwendung von $GeCl_4$ und $C_2F_6$ als Dotiermittel.

Nach dem PCVD-Verfahren wurde eine Vorform eines optischen Wellenleiters hergestellt, wobei während der Abscheidung zusätzlich ein geringer Gasstrom von $C_2F_6$ durch ein Substratrohr aus $SiO_2$ mit einem Innendurchmesser von 15,0 mm und einem Außendurchmesser von 18,0 mm geleitet wurde. Die Beschichtungslänge betrug etwa 45 cm und der mittlere Druck im Abscheidungsbereich etwa 10 mbar. Die Wandtemperatur des Substratrohres lag zwischen 1150 und 1300°C. Bei der Beschichtung wurde ein Mikrowellenresonator mit 500 W Leistungsaufnahme und einer Geschwindigkeit von etwa 8 m/min über dem Rohr hin- und hergefahren. Der totale Gasfluß während der Abscheidung wurde mit 800 sccm konstant gehalten, wobei sccm Kubikzentimeter pro Minute bei Normalbedingungen (0°C, 1 bar) bedeutet; die Beschichtungsdauer betrug insgesamt etwa 120 min. Die Reaktionsgasflüsse wurden wie folgt vorgegeben: Der Sauerstoff-Fluß und der $C_2F_6$-Fluß blieben während der gesamten Abscheidungszeit mit $Q_{O_2} = 700$ sccm und $Q_{C_2F_6} = 0,4$ sccm konstant. Im Kernbereich wurde der $SiCl_4$-Fluß von FIGFIG = 110 sccm und der $GeCl_4$-Fluß von

FIGFIG -18 sccm so variiert, daß - bei angenähert konstantem Gesamtfluß der Chloride von etwa 110 bis 120 sccm - ein parabolisches Brechungsindexprofil im Kernbereich erzielt wurde; die Abscheidungsgeschwindigkeit für das dotierte Material betrug unter den vorliegenden Bedingungen etwa 0,33 g/min.

Die so erhaltene PCVD-Vorform wurde anschließend kollabiert, zu einem optischen Wellenleiter ausgezogen und bezüglich der optischen Verluste untersucht. Es zeigte sich, daß der im vorliegenden Beispiel zugegebene $C_2F_6$-Gasfluß von etwa 0,34 Mol-% (bezogen auf den Chloridfluß) die OH-Zusatzdämpfung bei 1,38 µm von etwa 35 dB/km auf etwa 2,0 dB/km reduziert. Die relative Brechungsindexänderung durch Fluor-Einbau in das Kernmaterial betrug dabei -1,2 %o.

**Beispiel 2 :**

Herstellung eines Monomode-Wellenleiters unter Verwendung von $C_2F_6$ als Dotiermittel.

Nach dem PCVD-Verfahren wurde unter ausschließlicher Verwendung von $C_2F_6$ als Dotiermittel eine Faservorform hergestellt und zu einem Monomode-Wellenleiter ausgezogen. Die Dimension des Substratrohres sowie Temperatur, Druck, Beschichtungslänge und Resonatorbewegung entsprachen denen von Beispiel 1. Die Plasmaleistung lag dagegen nur bei etwa 200 W. Zu einem konstanten Fluß von etwa 40 sccm $SiCl_4$ und 220 sccm $O_2$ wurde während der Abscheidung des Claddingsmaterials etwa 0,7 sccm (1,72 Mol-%) $C_2F_6$ zugegeben. Der $C_2F_6$-Fluß wurde während der Abscheidung des Kernmaterials der optischen Faser auf etwa 0,15 sccm (0,37 Mol-%) reduziert. Die so hergestellte Vorform wurde zu einem Monomode-Wellenleiter ausgezogen und hinsichtlich der optischen Dämpfung untersucht. Wie der Zeichnung zu entnehmen ist, beträgt die Höhe der zusätzlichen OH-Absorption bei 1380 nm lediglich noch etwa 0,6 dB/km.

**Patentansprüche**

1. Verfahren zur Herstellung von optischen Wellenleitern, wobei auf der Innenseite eines Substratrohres aus einem reaktiven Gasgemisch durch Elektronenstoßanregungen direkt kompakte Glasschichten ohne Sintern erzeugt werden, dadurch gekennzeichnet, daß der Mischung der Reaktionsgase während der Gesamtdauer der Erzeugung von Glasschichten, sowohl bei der Abscheidung von etwaigen Anpassungs- oder optischen Claddingschichten als auch bei der Abscheidung von Kernmaterial, eine flüchtige wasserstofffreie Fluorverbindung beigemischt wird.

2. Verfahren nach Anspruch 1, dadurch gekennzeichnet, daß die Menge der flüchtigen wasserstofffreien Fluorverbindung während der Gesamtdauer der Erzeugung von Glasschichten konstant gehalten wird.

3. Verfahren nach Anspruch 1 oder 2, dadurch gekennzeichnet, daß der Mischung der Reaktionsgase eine wasserstofffreie Fluorkohlenstoffverbindung beigemischt wird.

4. Verfahren nach Anspruch 3, dadurch gekennzeichnet, daß der Mischung der Reaktionsgase $C_2F_6$ beigemischt wird.

5. Verfahren nach Anspruch 4, dadurch gekennzeichnet, daß der Mischung der Reaktionsgase 0,2 bis 1,3 Mol-% $C_2F_6$ beigemischt wird.

**Claims**

1. A method of manufacturing optical waveguides, in which compact glass layers are produced directly on the inside of a substrate tube from a reactive gas mixture by electron impact initiation without sintering, characterized in that during the overall duration of the manufacture of glass layers a volatile hydrogen-free fluorine compound is added to the mixture of the reaction gases, both during the deposition of any adjusting or optical cladding layers and during the deposition of core material.

2. A method as claimed in Claim 1, characterized in that the quantity of the volatile hydrogen-free fluorine compound is kept constant during the whole duration of the manufacture of glass layers.

3. A method as claimed in Claim 1 or 2, characterized in that a hydrogen-free fluoro carbon compound is added to the mixture of the reaction gases.

4. A method as claimed in Claim 3, characterized in that $C_2F_6$ is added to the mixture of the reaction gases.

5. A method as claimed in Claim 4, characterized in that 0.2 to 1.3 mol.-% of $C_2F_6$ is added to the mixture of the reaction gases.

**Revendications**

1. Procédé pour la fabrication de guides d'ondes optiques, selon lequel des couches de verre compactes sont réalisées de façon directe sans frittage sur la face intérieure d'un tube de substrat à partir d'un mélange gazeux réactif par excitation par chocs d'électrons, caractérisé en ce que lors de la durée totale de la réalisation de couche en verre, tant pendant le dépôt d'éventuelles couches d'adaptation ou couches de revêtement optiques que pendant le dépôt de matériau de noyau, le mélange de gaz de réaction est additionné d'un composé de fluor exempt d'hydrogène volatil.

2. Procédé selon la revendication 1, caractérisé en ce que la quantité de composé de fluor exempt d'hydrogène volatil pendant toute la durée de la réalisation de couches en verre est maintenue constante.

3. Procédé selon la revendication 1 ou 2, caractérisé en ce que le mélange des gaz de réaction est additionné d'un composé de fluorure de carbone exempt d'hydrogène.

4. Procédé selon la revendication 3, caractérisé en ce que le mélange de gaz de réaction est additionné de $C_2F_6$.

5. Procédé selon la revendication 4, caractérisé en ce que le mélange des gaz de réaction est additionné de 0,2 à 1,3 % en moles de $C_2F_6$.